# EUROPEAN PATENT SPECIFICATION

(11) **EP 2 785 790 B1**
(45) Date of publication and mention of the grant of the patent: **01.02.2017**
(21) Application number: 12801669.8
(22) Date of filing: 20.11.2012
(51) Int. Cl.: C08L 27/00, C08L 27/06, C08L 27/24, C08L 33/02, C08L 35/00, C08K 5/58

(54) **STABILIZED COMPOSITIONS OF HALOGENATED POLYMERS**
STABILISIERTE ZUSAMMENSETZUNGEN AUS HALOGENIERTEN POLYMEREN
COMPOSITIONS STABILISÉES DE POLYMÈRES HALOGÉNÉS

(30) Priority: 30.11.2011 US 201161565112 P
(43) Date of publication of application: 08.10.2014
(73) Proprietor: Rohm and Haas Company, Philadelphia, PA 19106 (US)
(72) Inventor: CHO, Jian-Yang, Ambler, PA 19002 (US); LUNDQUIST, Eric G., North Wales, PA 19454 (US)
(74) Representative: Hoggins, Mark Andrew
(86) International application number: PCT/US2012/066059
(87) International publication number: WO 2013/085714

(56) References cited:
- EP-A1- 2 241 595
- EP-A1- 2 241 596
- EP-A1- 2 298 835
- WO-A1-2006/060223
- US-A- 3 705 137
- US-A- 5 100 946

## Description

This invention relates to the thermal stabilization of halogen-containing polymer compound compositions, more particularly, this invention relates to a poly(vinyl chloride) or a chlorinated poly(vinyl chloride) (cPVC) compound composition comprising an alkyl tin stabilizer, at least one salt of a polymeric polyacid in solid form on its own, and greater than or equal to 0.52 wt% moisture level in the final compound composition.

It is well known that halogen-containing polymers are normally susceptible to heat-induced deterioration and that the physical properties of such polymers deteriorate and color changes take place during processing at elevated temperatures. Undesirable color changes within the polymer often occur within the first 5 to 15 minutes as well as during later stages of thermal processing. Examples of such polymers are the vinyl and vinylidene polymers in which the halogen is attached directly to carbon atoms. Poly(vinyl chloride), chlorinated poly(vinyl chloride), poly(vinylidene chloride), chlorinated polyethylene, poly(vinyl fluoride), poly(vinylidene fluoride), copolymers of vinyl chloride and vinylidene chloride, are the most familiar polymers which require stabilization for their survival during fabrication into pipe, window profile, siding, bottles, wall covering, packaging film, foamed trim and the like.

There has been a great deal of research in the development of more effective thermal stabilizers. Organotin-based or mercaptide based heat stabilizers have become one of the most efficient and widely used stabilizers for rigid PVC and cPVC. However, the high cost of tin metal has significantly impacted the cost performance balance of tin based stabilizers making them less economically attractive. US Patent 5,100,946 seeks to solve the problems of the art by providing a stabilized PVC composition containing a stabilizer and at least one metal salt of a carboxylic acid having at least two carboxyl groups. The reference discloses dibutyl and octyl tin mercaptides and /or alkyl tin mercaptoesters with sulfide bridges combined with disodium adipate salts produce a stabilized PVC composition.

European Patent Application 0107063 discloses the use of sodium citrate salts with a particle size of less than 30 micrometers can be used to stabilize vinyl chloride polymers. In all of these cases, the sodium adipate and sodium citrate must be ground to a small particle size to obtain good dispersibility and thus good performance in the PVC and cPVC formulations. Even with particles ground to less than 30 micrometers, issues such as haze and compatibility prevent these sodium salts from being used in transparent PVC film applications. Additionally, sodium salts that are crystalline and melt at temperatures above 150°C present additional issues as the use of these materials will lead to plate-out in commercial processing operations. Thus a more cost effective and compatible stabilizer would be of significant value for use in the stabilization of halogen-containing polymers and copolymers such as PVC and cPVC.

US Patent Application 20100267872 and European Patent 2241595 disclosed a stabilized halogen-containing polymer composition comprising an alkyl tin stabilizer and at least one salt of a polymeric polyacid such as a polycarboxylic acid salt supported on a polymeric material. This approach allows good dispersion of polymeric polyacid salts, leading to good performance in the PVC and cPVC formulations.

We have found that the combination of poly(vinyl chloride) or chlorinated poly(vinyl chloride) polymer with a salt of a polymeric polyacid in solid form on its own in combination with an alkyl tin stabilizer improves the performance of the alkyl tin stabilizer and provides a lower cost, higher performance thermally stabilized poly(vinyl chloride) or chlorinated poly(vinyl chloride) polymer compound composition when the overall moisture level in the final halogen-containing polymer compound composition is greater than or equal to 0.52%.

According to one aspect of the present invention, there is provided a stabilized halogen-containing polymer compound composition comprising:
a) greater than 40% by weight of a halogen-containing polymeric material;
b) 0.01 to 5.0 phr of an alkyl tin stabilizer comprising a mixture of mono alkyl tin stabilizer and di alkyl tin stabilizer;
c) 0.01 to 5.0 phr of a salt of a polymeric polyacid material in solid form; and
d) greater than or equal to 0.52 wt% moisture level in the final compound composition.

Preferably, as used herein by "halogen-containing polymer compound composition" is meant a PVC or cPVC compound composition before processing into a final product. Herein, the terms "PVC" and "halogen-containing polymeric mixture" or the like are used interchangeably. PVC compound is produced by blending a variety of PVC additives with a PVC resin, often in a specific order, in a blender. High intensity mixing and external heating then provide sufficient heat to raise the batch temperature, which will melt the lubricants and disperse and incorporate all of the additives into the PVC polymer to form a PVC compound. These additives most typically include heat stabilizers and both external and internal lubricants, and may also include processing aids, impact modifiers, pigments, fillers, antioxidants, flame proofing agent and blowing agents, to prevent, reduce or mask discoloration or deterioration caused by heating, aging, exposure to light or weathering.

As used herein by "phr" is meant part per 100 parts of halogenated polymer e.g. PVC.

As used herein, by "alkyl tin stabilizers" is meant mixtures of mono and di alkyl tin mercaptans which can be represented by the following formulas: 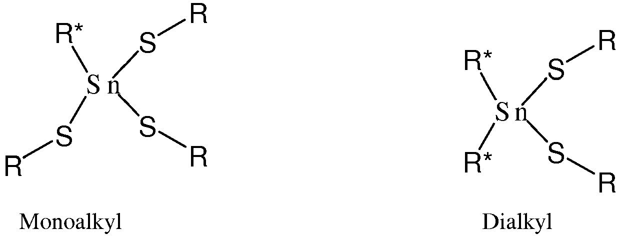 where R* = methyl, butyl or octyl group, R is a substituted or unsubstituted hydrocarbyl group, R¹-O-C(=O)-R², R¹-C(=O)-O-R³. where R¹ is a C₁-C₂₀ hydrocarbyl group and R² is a substituted or unsubstituted hydrocarbyl group and R³ is a substituted or unsubstituted hydrocarbyl group or hydrogen.

As used herein by "hydrocarbyl" is meant a hydrocarbon group containing carbon and hydrogen.

As used herein by "polymeric polyacid," is meant a polymeric material with a MW greater than 1000 containing 2 or more acidic groups.

As used herein, the terms "salt of a polymeric polyacid" and "polymeric polyacid salt" are used interchangeably.

All percentages are weight percentages, and all temperatures are in °C, unless otherwise indicated.

The present invention relates to a stabilized halogen-containing polymer compound composition. The stabilized halogen-containing polymer compound composition comprises a polymeric material wherein the polymeric material comprises a halogen-containing polymeric composition, 0.01 to 5.0 phr of an alkyl tin stabilizer, 0.01 to 5.0 phr of a salt of a polymeric polyacid in solid form and greater than or equal to 0.65 wt% moisture level in the final compound composition.

In the present invention, the salt of a polymeric polyacid is in the form of a solid. Suitable examples of such salt of a polymeric polyacids include but are not limited to partially and fully neutralized homopolymers and copolymers of acrylic acid, itaconic acid, maleic anhydride, maleic acid, methacrylic acid (with styrene), and (meth)acrylic ester monomers. Copolymers such as, for example, polymethylmethacrylate copolyacrylic acid sodium salt, polyethylacrylate copolyacrylic acid sodium salt, polybutylacrylate copolyacrylic acid sodium salt, polybutylmethacrylate copolyacrylic acid sodium salt, polymaleic acid copolyacrylic acid sodium salt, polystyrene copoly(meth)acrylic acid sodium salt are also useful. The salts of polymers and copolymers of phosphoethylmethacrylate, vinylphosphonic acid and 2-acrylamido-2-methyl-1-propane sulfonic acid are also useful. The molecular weight of such salts of polymeric polyacids may range from 1,000 - 100,000 g/mol, alternatively, 1,000 to 50,000 g/mol, alternatively 1,000 to 15,000 g/mol, alternatively 1,000 to 5,000 g/mol.

The salt of the polymeric polyacid in the solid form can be obtained for example via spray drying of an aqueous solution of the polymer polyacid salt.

The polymeric material can be a rigid polymeric material, or a flexible polymeric material plasticized with a non-chlorinated plasticizer. By rigid, it is meant that the polymer contains substantially no plasticizer. By flexible, it is meant that the polymer contains plasticizer. Suitable plasticizers include, but are not limited to, phthalate esters, as well as adipates, azelates, phosphates, and epoxidized oil. A commonly used plasticizer is di(2-ethylhexyl) phthalate (DOP). Other useful plasticizers include tricresyl phosphate, dibutyl phthalate, dibutyl sebacate, tributyl phosphate, epoxidized esters, dioctyl phthalate, trioctyl phosphate, dioctyl sebacate and adipate, and various low-molecular weight polymers such as poly(propylene glycol) esters are now widely utilized as plasticizers for the vinyls. The plasticizer content varies widely with the end use of the material, but typically is from 10 to 60 percent by weight of the total composition.

It is contemplated that the halogen-containing polymeric material comprises a poly(vinyl chloride) homopolymer or a chlorinated poly(vinyl chloride) homopolymer.

Halogen-containing polymers which are stabilized include but are not limited to poly(vinyl chloride), chlorinated poly(vinyl chloride) and poly(vinylidene chloride) with poly(vinyl chloride) and chlorinated poly(vinyl chloride) homopolymers being preferred. The halogen-containing polymers can include copolymers with vinyl chloride with a copolymerizable ethylenically unsaturated monomer such as vinylidene chloride, vinyl acetate, vinyl butyrate, vinyl benzoate, diethyl fumarate, diethyl maleate, other alkyl fumarates and maleates, vinyl propionate, methyl acrylate, 2-ethylhexyl acrylate, butyl acrylate, ethyl acrylate and other alkyl acrylates, methyl methacrylate, ethyl methacrylate, butyl methacrylates, hydroxy-ethyl methacrylate and other alkyl methacrylates, methyl alpha chloroacrylate, styrene, vinyl ethers such as vinyl ethyl ether, vinyl chloroethyl ether, vinyl phenyl ether, vinyl ketones such as vinyl methyl ketone, vinyl phenyl ketone, trichloroethylene, 1-fluoro-1-chloro-ethylene, acrylonitrile, chloro-acrylonitrile, allylidene diacetate, chloroallylidene diacetate, and ethylene and propylene or other alkyl esters of mono-olefinic acids, as well as blends and alloys with other thermoplastic resins. The halogen-containing polymer may include polyvinyl halogen polymer, including the poly(vinyl chloride), although others such as the bromide or fluoride may be used. Also useful are halogenated polyolefins such as chlorinated polyethylene.

Polymer blends useful in the present invention include blends of: poly(vinyl chloride) and poly(ethylene), poly(vinyl chloride) and poly(methyl methacrylate), poly(vinyl chloride) and poly(butyl methacrylate), poly(vinyl chloride) and polystyrene; poly(vinyl chloride) and acrylonitrile-butadiene-styrene copolymer, and poly(vinyl chloride) and poly(methyl acrylate).

This invention is a formulation comprising from 40 to 99.9 % by weight, preferably 45 to 97 % and more preferably 50 to 95 % of one or more halogenated polymer materials.

It is preferred that the molecular weight determined using standard size exclusion chromatography with refractive index and matrix assisted laser desorption/ ionization mass spectroscopy to determine average molecular weight of the salts of the polymeric polyacids be between 1,000 daltons and 100,000 daltons. Preferred molecular weights of the salts of the polymeric polyacids are between 1,000 and 15,000 daltons.

The amount of the alkyl tin stabilizer and salt of polymeric polyacid may vary to attain the stability required for the particular processing conditions and halogen polymer used. The use of the polymeric polyacid salts of the present invention allows the halogenated polymer compound to achieve equivalent thermal stability with the use of less tin based stabilizer. The compositions contain from 0.01 to 5.0, preferably from 0.1 to 4.0, preferably from 0.1 to 3.0, or preferably from 0.2 to 2.0 parts of alkyl tin stabilizer per hundred parts of halogenated polymer.

The compositions contain from 0.01 to 5.0, preferably from 0.1 to 4.0, more preferably from 0.1 to 3.0, or further preferably from 0.2 to 2.0 parts of a salt of a polymeric polyacid, per hundred parts of halogenated polymer.

The compositions contain greater than or equal 0.65 wt% moisture level, more preferably greater than or equal to 0.77 wt% moisture level, or further preferably greater than or equal to 1wt% moisture level in the final halogenated polymer compound compositions. Alkyl tin stabilizers useful in the present invention include mercaptide and mercapto-ester based tin stabilizers. Suitable examples of alkyl tin stabilizers useful in the present invention include but are not limited to mono and di alkyl tin mercaptans such as mono and dialkyl tin dodecylmercaptides, mono and di alkyl tin mercaptoesters such as mono and di alkyl tin 2-ethylhexyl thioglycolates and reverse mercapto esters such as mono and di alkyl tin mercaptoethyloleates and mercaptoethyltallates.

Examples of alkyl tin stabilizers useful in the present invention include methyl tin mercaptide, butyl tin mercaptide and octyl tin mercaptide stabilizers and mixtures thereof. Suitable methyl tin stabilizer examples include but are not limited to mono and di methyl tin dodecylmercaptides, mono and di methyl tin mercaptoesters such as mono and di methyl tin 2-ethylhexyl thioglycolates and reverse mercapto esters such as mono and di methyl tin mercaptoethyloleates and mercaptoethyltallates. Suitable butyl tin stabilizer examples include but are not limited to mono and di butyl tin dodecylmercaptides, mono and di butyl tin mercaptoesters such as mono and di butyl tin 2-ethylhexyl thioglycolates and reverse mercapto esters such as mono and di butyl tin mercaptoethyloleates and mercaptoethyltallates. Suitable octyl tin stabilizer examples include but are not limited to mono and di octyl tin dodecylmercaptides, mono and di octyl tin mercaptoesters such as mono and di octyl tin 2-ethylhexyl thioglycolates and reverse mercapto esters such as mono and di octyl tin mercaptoethyloleates and mercaptoethyltallates. Preferably, the methyl, butyl, and octyl tin mercaptide stabilizers do not contain sulfide bridges between tin metal centers.

The stabilized halogen-containing polymer compound compositions of the present invention can be used directly in extrusion, injection molding, blow molding and calendaring, and can be formed into such finished articles as fibers, wire and cable, siding, window profiles, foam sheet, pipe, elbows and other pipe fittings, film, sheets and bottles.

The following examples illustrate the present invention. The examples should not be construed as limiting the invention. Parts are parts per hundred parts of resin (phr) unless otherwise indicated.

### EXAMPLES

The following is a listing of tin based stabilizers used in the Examples:
- Stabilizer A = 27% monomethyltin tris(2-ethylhexylthioglycolate), 73% dimethyltin bis(2-ethylhexylthioglycolate)
- Stabilizer B = 60% monomethyltin tris(2-ethylhexylthioglycolate), 40% dimethyltin bis(2-ethylhexylthioglycolate)

The following is a listing of polymeric polyacid salts used in the Examples:
- Polymeric polyacid salt A = Spray dried ACUMER™ 1010, a registered trademark of Rohm and Haas Company a wholly owned subsidiary of The Dow Chemical Company. It is the sodium salt of polyacrylic acid. The average molecular weight (Mw) = 2,000 g/mol.
- Polymeric polyacid salt B = Spray dried ACUSOL™ 425N, a registered trademark of Rohm and Haas Company a wholly owned subsidiary of The Dow Chemical Company. It is the sodium salt of polymaleic acid copolyacrylic acid. The average molecular weight (Mw) = 1,900 g/mol.

**Table 1. cPVC base formulation used in the Example 1.**

| | |
|---|---|
| cPVC resin (TempRite^{®} 677 X670, Lubrizol Advanced Materials, Inc.) | 100 phr |
| PARALOID ™ KM-X100Pro (Acrylic Impact Modifier a registered trademark of Rohm and Haas Company a wholly owned subsidiary of The Dow Chemical Company) | 5.5 phr |
| Titanium dioxide (Tiona RCL-4, Millennium Chemicals) | 4.4 phr |
| Calcium carbonate (Omyacarb^{®} UF-FL, Omya) | 2.27 phr |
| Advalube™ E-2100 (Ester lubricant, the Dow Chemical Company) | 1.1 phr |
| AC-629A (Oxidized polyethylene homopolymer, Honeywell International, Inc.) | 0.55 phr |
| AC-316A (Oxidized polyethylene homopolymer, Honeywell International, Inc.) | 0.55 phr |
| AC-617A (Polyethylene homopolymer, Honeywell International, Inc.) | 0.83 phr |
| Irganox™ 245 (Hindered phenolic antioxidant, Ciba, now part of BASF) | 0.15 phr |
| Stabilizer- Methyl Tin Mercaptide | |
| Polymeric polyacid salt | |

### Testing conditions:

To a Brabender rheometer, heated to 185°C, 63 grams of the cPVC formulation was charged. While mixing at 50 rpm and heating at 185°C, hot cPVC samples were taken from the mixing bowl at the indicated times, pressed, punched into 5/8" x 5/8" (1.6 x 1.6 cm) chips, and placed on a chart as
a function of time. The total color difference, ΔE, of each chip (except 2 min chip) was determined using the Hunter Lab LabScan XE instrument. Time-dependent ΔE development was used to assess heat stability performance of each cPVC formulation. The total color difference, ΔE, is a single value that takes into account the differences between the L, a, b of the sample and standard. Chip sample collected at 2 minutes in each run was used as the standard. The results are presented in Table 2.

### Determination of molecular weight:

Molecular weight of the polymeric polyacid salts was determined in water using size exclusion chromatography (SEC). The separations were carried out on a liquid chromatograph consisting of an Agilent 1100 Model isocratic pump, autosampler, degasser (all Waldbronn, Germany) and Waters 410 Model differential refractometer (Milford, MA) operated at ambient temperature. System control, data acquisition, and data processing were performed using version 3.1 of Cirrus^{®} software (Polymer Laboratories, part of Varian, Church Stretton, UK).

SEC separations were performed using two analytical PLaquagel-OH 30A columns (300x7.5mm ID) plus a guard column (50x7.5mm ID) connected in series. 100 µL of sample solution were injected into column set for SEC separation. The absolute molecular weights (g/mol) Molar Mass characteristics determined by SEC-RI/MALDI-MS.

### Determination of moisture level:

The moisture levels of cPVC compounds were determined by their weight loss (in wt%) after drying in a preheated 150°C oven for 60 min with an assumption that they have same amount of other volatiles in the compounds.

### Example 1.

**Table 2. cPVC formulation.**

| **Run** # | **1 comparative with no polymeric polyacid salt** | **2** | **4** | **3** | **5** |
|---|---|---|---|---|---|
| Moisture (in wt%) | 1.10% | 0.65% | 1.51% | 0.46% | 1.07% |
| Stabilizer | A | A | A | A | A |
| phr | 1.5 | 1.5 | 1.5 | 1.5 | 1.5 |
| Polymeric polyacid salt A, phr | | 1.0 | 1.0 | | |
| Polymeric polyacid salt B, phr | | | | 1.0 | 1.0 |
| ΔE (total color difference) | | | | | |
| 4 min | 3.93 | 3.95 | 2.87 | 4.22 | 3.82 |
| 6 min | 6.57 | 6.87 | 4.79 | 6.47 | 6.13 |
| 8 min | 9.52 | 9.79 | 7.67 | 8.20 | 8.16 |
| 10 min | 15.65 | 12.56 | 8.75 | 10.95 | 8.92 |
| 12 min | 20.57 | 19.68 | 10.20 | 16.34 | 10.72 |
| 14 min | 25.19 | 22.65 | 12.29 | 20.93 | 12.01 |
| 16 min | 30.37 | 26.31 | 15.21 | 24.72 | 12.36 |
| 18 min | | | 21.07 | 29.38 | 14.07 |
| 20 min | | | 26.89 | | 16.41 |
| 22 min | | | | | 22.45 |
| 24 min | | | | | 27.44 |

### Run #3 - Comparative with low moisture level

The results show that the co-stabilizing efficiencies of the polymeric polyacid salts A and B are highly dependent on the overall moisture levels (in wt%) of the final cPVC compound compositions. They exhibit higher co-stabilizing efficiencies when the overall moisture levels in the final cPVC compound compositions are greater than 0.45wt% as compared to the comparative control with no polymeric polyacid salt.

**Table 3. PVC window profile base formulation used in the Example 2.**

| | |
|---|---|
| PVC resin (Formolon^{®} 622S, Formosa Plastics) | 100 phr |
| Titanium dioxide (Tiona RCL-6, Millennium Chemicals) | 9 phr |
| Calcium carbonate (Omyacarb^{®} UFT-FL, Omya) | 3 phr |
| Advalube™ B-3400 (specialty lubricant, the Dow Chemical Company) | 2.6 phr |
| Stabilizer | |
| Polymeric polyacid salt | |

### Testing conditions:

To a Brabender rheometer, heated to 185°C, 65 grams of the PVC formulation was charged. While mixing at 60 rpm and heating at 185°C, hot PVC samples were taken from the mixing bowl at the indicated times, pressed, punched into 5/8" x 5/8" (1.6 x 1.6 cm) chips, and placed on a chart as a function of time. The b values of the chips were measured using the Hunter Lab LabScan XE instrument. The results are presented in Table 4. b value provides an indication of sample color. Positive b is yellow and negative b is blue. PVC usually degrades under processing conditions and discolors from white to yellow, brown and then dark brown color. As a result, b values of chip samples are expected to increase as a function of time due to longer heat history of PVC.

### Determination of moisture level:

The moisture levels of PVC compounds were determined by their weight loss (in wt%) after drying in a preheated 150°C oven for 60 min with an assumption that they have same amount of other volatiles in the compounds.

### Example 2.

**Table 4. PVC window profile formulation.**

| **Run #** | **1 Comparative with no polymeric polyacid salt** | **2 Comparative** | **3** |
|---|---|---|---|
| Moisture (in wt%) | | 0.52% | 0.77% |
| Stabilizer | B | B | B |
| wt% mono | 60 | 60 | 60 |
| phr | 0.9 | 0.9 | 0.9 |
| Polymeric polyacid salt A, phr | | 0.3 | 0.3 |
| b value | | | |
| 2 min | 2.29 | 2.22 | 2.50 |
| 4 min | 3.01 | 3.04 | 2.96 |
| 6 min | 4.27 | 4.49 | 3.76 |
| 8 min | 5.95 | 6.76 | 4.69 |
| 10 min | 9.70 | 11.61 | 7.08 |
| 12 min | 11.21 | 11.81 | 12.03 |

The results show that the co-stabilizing efficiency of the polymeric polyacid salt A is highly dependent on the overall moisture level (in wt%) of the final PVC compound composition. Its co-stabilizing efficiency is higher when the overall moisture level in the final PVC compound composition is greater than 0.75 wt% as compared to the comparative examples with no polymeric polyacid salt and with polymeric polyacid salts with lower overall moisture levels (0.52% wt%)

## Claims

1. A stabilized halogen-containing polymer compound composition comprising:
(a) greater than 40% by weight of halogenated polymeric material;
(b) 0.01 to 5.0 phr of an alkyl tin stabilizer comprising a mixture of mono and di alkyl tin mercaptans that are represented by the following formulas: 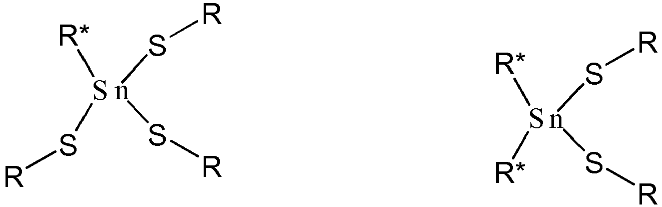 where R* = methyl, butyl or octyl group, R is a substituted or unsubstituted hydrocarbyl group, R¹-O-C(=O)-R², R¹-C(=O)-O-R^{3,} where R¹ is a C₁-C₂₀ hydrocarbyl group and R² is a substituted or unsubstituted hydrocarbyl group and R³ is a substituted or unsubstituted hydrocarbyl group or hydrogen;
(c) 0.01 to 5.0 phr of a salt of a polymeric polyacid in solid form; and
(d) greater than or equal to 0.65 wt% moisture level in the final compound composition, wherein said moisture level is determined as weight loss (in wt%) after drying
the composition in an oven preheated 150°C for 60 min.

2. The stabilized halogen-containing polymer compound composition of claim 1 wherein halogenated polymer material comprises poly(vinyl chloride), poly(vinyl fluoride), poly(vinylidene chloride), poly(vinylidene fluoride), chlorinated poly(vinyl chloride), chlorinated polyethylene, copolymers of vinyl chloride and vinylidene chloride or mixtures thereof.

3. The stabilized halogen-containing polymer compound composition of claim 1 wherein the alkyl tin stabilizer comprises a methyl tin mercaptide, a butyl tin mercaptide, an octyl tin mercaptide, or a mixture thereof.

4. The stabilized halogen-containing polymer compound composition of claim 3 wherein the alkyl tin stabilizer is selected from the group comprising mono and di methyl tin dodecylmercaptides, mono and di methyl tin 2-ethylhexyl thioglycolate, mono and di methyl tin mercaptoethyloleates or mercaptoethyltallates, mono and di butyl tin dodecylmercaptides, mono and di butyl tin 2-ethylhexyl thioglycolate, mono and di butyl tin mercaptoethyloleates or mercaptoethyltallates, mono and di octyl tin dodecylmercaptides, mono and di octyl tin 2-ethylhexyl thioglycolate, and mono and di octyl tin mercaptoethyloleates or mercaptoethyltallates.

5. The stabilized halogen-containing polymer compound composition of claim 1 wherein the salt of the polymeric polyacid material is the salt of either a polyacrylic acid homopolymer, a polyacrylic acid copolymer, a polymethacrylic acid homopolymer, a polymethacrylic acid copolymer, a poly(maleic acid) homopolymer, or poly(maleic acid) copolymer.

6. The stabilized halogen-containing polymer compound composition of claim 1 wherein the stabilized halogen-containing polymer compound composition comprises a plasticizer in the amount from 10 - 60% by weight of the total composition.

## Patentansprüche

1. Eine stabilisierte halogenhaltige Polymerverbindungszusammensetzung, beinhaltend:
(a) zu mehr als 40 Gew.-% halogeniertes Polymermaterial;
(b) zu 0,01 bis 5,0 phr einen Alkylzinnstabilisator, der eine Mischung aus Mono- und Dialkylzinnmercaptanen beinhaltet, die durch die folgenden Formeln dargestellt sind: 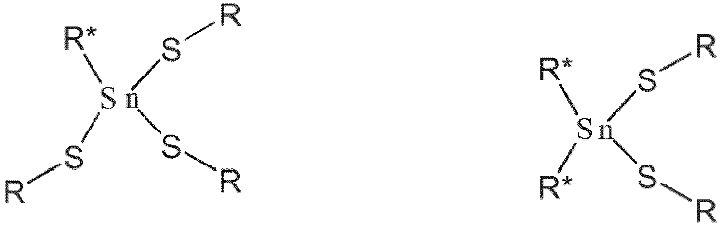 wobei R* = Methyl-, Butyl- oder Octylgruppe, R eine substituierte oder nichtsubstituierte Hydrocarbylgruppe, R¹-O-C(=O)-R², R¹-C(=O)-O-R³ ist, wobei R¹ eine C₁-C₂₀-Hydrocarbylgruppe ist und R² eine substituierte oder nichtsubstituierte Hydrocarbylgruppe ist und R³ eine substituierte oder nichtsubstituierte Hydrocarbylgruppe oder Wasserstoff ist;
(c) zu 0,01 bis 5,0 phr ein Salz einer polymeren Polysäure in fester Form; und
(d) zu mehr als oder gleich 0,65 Gew.-% Feuchtigkeitsniveau in der endgültigen Verbindungszusammensetzung, wobei das Feuchtigkeitsniveau als Gewichtsverlust (in Gew.-%) nach dem Trocknen der Zusammensetzung in einem Ofen, der 60 Min. lang auf 150 °C vorgeheizt worden ist, bestimmt wird.

2. Stabilisierte halogenhaltige Polymerverbindungszusammensetzung gemäß Anspruch 1, wobei halogeniertes Polymermaterial Poly(vinylchlorid), Poly(vinylfluorid), Poly(vinylidenchlorid), Poly(vinylidenfluorid), chloriertes Poly(vinylchlorid), chloriertes Polyethylen, Copolymere von Vinylchlorid und Vinylidenchlorid oder Mischungen davon beinhaltet.

3. Stabilisierte halogenhaltige Polymerverbindungszusammensetzung gemäß Anspruch 1, wobei der Alkylzinnstabilisator ein Methylzinnmercaptid, ein Butylzinnmercaptid, ein Octylzinnmercaptid oder eine Mischung davon beinhaltet.

4. Stabilisierte halogenhaltige Polymerverbindungszusammensetzung gemäß Anspruch 3, wobei der Alkylzinnstabilisator aus der Gruppe ausgewählt ist, die Folgendes beinhaltet: Mono- und Dimethylzinndodecylmercaptide, Mono- und Dimethylzinn-2-ethylhexylthioglycolat, Mono- und Dimethylzinnnmercaptoethyloleate oder -mercaptoethyltallate, Mono- und Dibutylzinndodecylmercaptide, Mono- und Dibutylzinn-2-ethylhexylthioglycolat, Mono- und Dibutylzinnmercaptoethyloleate oder -mercaptoethyltallate, Mono- und Dioctylzinndodecylmercaptide, Mono- und Dioctylzinn-2-ethylhexylthioglycolat und Mono- und Dioctylzinnmercaptoethyloleate oder -mercaptoethyltallate.

5. Stabilisierte halogenhaltige Polymerverbindungszusammensetzung gemäß Anspruch 1, wobei das Salz des polymeren Polysäurematerials das Salz von entweder einem Polyacrylsäure-Homopolymer, einem Polyacrylsäure-Copolymer, einem Polymethacrylsäure-Homopolymer, einem Polymethacrylsäure-Copolymer, einem Poly(maleinsäure)-Homopolymer oder einem Poly(maleinsäure)-Copolymer ist.

6. Stabilisierte halogenhaltige Polymerverbindungszusammensetzung gemäß Anspruch 1, wobei die stabilisierte halogenhaltige Polymerverbindungszusammensetzung einen Weichmacher in der Menge von 10-60 Gew.-% der Gesamtzusammensetzung beinhaltet.

## Revendications

1. Une composition de composé polymère contenant un halogène stabilisé comprenant :
(a) plus de 40 % en poids de matériau polymérique halogéné ;
(b) de 0,01 à 5,0 pce d'un stabilisant étain alkyle comprenant un mélange de mercaptans d'étain mono et di alkyle qui sont représentés par les formules suivantes : 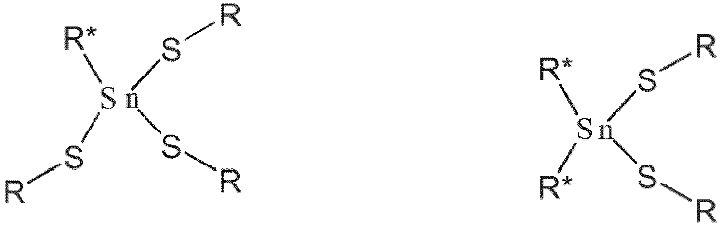 où R* = groupe méthyle, butyle ou octyle, R est un groupe hydrocarbyle substitué ou non substitué, R¹-O-C(=O)-R², R¹-C(=O)-O-R³ où R¹ est un groupe hydrocarbyle en C₁ à C₂₀ et R² est un groupe hydrocarbyle substitué ou non substitué et R³ est un groupe hydrocarbyle substitué ou non substitué ou un hydrogène ;
(c) de 0,01 à 5,0 pce d'un sel d'un polyacide polymérique sous forme solide ; et
(d) plus de ou égal à 0,65 %, en poids, de taux d'humidité dans la composition de composé finale, dans laquelle ledit taux d'humidité est déterminé comme une perte de poids (en % en poids) après séchage de la composition dans un four préchauffé à 150 °C pendant 60 min.

2. La composition de composé polymère contenant un halogène stabilisé de la revendication 1 dans laquelle le matériau polymère halogéné comprend du poly(chlorure de vinyle), du poly(fluorure de vinyle), du poly(chlorure de vinylidène), du poly(fluorure de vinylidène), du poly(chlorure de vinyle) chloré, du polyéthylène chloré, des copolymères de chlorure de vinyle et de chlorure de vinylidène ou des mélanges de ceux-ci.

3. La composition de composé polymère contenant un halogène stabilisé de la revendication 1 dans laquelle le stabilisant étain alkyle comprend un mercaptide d'étain méthyle, un mercaptide d'étain butyle, un mercaptide d'étain octyle, ou un mélange de ceux-ci.

4. La composition de composé polymère contenant un halogène stabilisé de la revendication 3 dans laquelle le stabilisant étain alkyle est sélectionné dans le groupe comprenant des dodécylmercaptides d'étain mono et di méthyle, du 2-éthylhexyl thioglycolate d'étain mono et di méthyle, des mercaptoéthyloléates ou mercaptoéthyltallates d'étain mono et di méthyle, des dodécylmercaptides d'étain mono et di butyle, du 2-éthylhexyl thioglycolate d'étain mono et di butyle, des mercaptoéthyloléates ou mercaptoéthyltallates d'étain mono et di butyle, des dodécylmercaptides d'étain mono et di octyle, du 2-éthylhexyl thioglycolate d'étain mono et di octyle, des mercaptoéthyloléates ou mercaptoéthyltallates d'étain mono et di octyle.

5. La composition de composé polymère contenant un halogène stabilisé de la revendication 1 dans laquelle le sel du matériau polyacide polymérique est le sel soit d'un homopolymère d'acide polyacrylique, soit d'un copolymère d'acide polyacrylique, soit d'un homopolymère d'acide polyméthacrylique, soit d'un copolymère d'acide polyméthacrylique, soit d'un homopolymère de poly(acide maléique), soit d'un copolymère de poly(acide maléique).

6. La composition de composé polymère contenant un halogène stabilisé de la revendication 1, la composition de composé polymère contenant un halogène stabilisé comprenant un plastifiant en une quantité allant de 10 à 60 % en poids de la composition totale.
